# EUROPEAN PATENT APPLICATION

(11) **EP 1 641 242 A2**
(43) Date of publication of application: **29.03.2006**
(21) Application number: 05255915.0
(22) Date of filing: 22.09.2005
(51) Int. Cl.: H04N 1/50

(54) **Automatic skew adjusting apparatus and automatic skew adjusting method**

(30) Priority: 24.09.2004 KR 2004076893
(71) Applicant: Samsung Electronics Co., Ltd., Yeongtong-gu Suwon-si, Gyeonggi-do (KR)
(72) Inventor: Kim, Jong-tae, 508, Daebang-dong, Dongjak-gu Seoul (KR); Shin, Hyun-seong, Jangan-gu Suwon-si, Gyeonggi-do (KR)
(74) Representative: Robinson, Ian Michael

(57) **Abstract**

A skew adjusting apparatus is provided for an image forming apparatus having a plurality of skew adjusting parts (130) arranged in a plurality of laser scanning units (111), respectively. The automatic skew adjusting apparatus comprises a driving source (120), an actuating part (140) arranged on a driving shaft (123) of the driving source (120) so that the actuating part (140) can be selectively connected with one of the skew adjusting parts (130) depending on a position of the driving source (120). The actuating part (140) actuates the connected skew adjusting part (130) as the driving shaft (123) rotates. A positioning part (170) moves the driving source (120) and a power transmission part (150) transmits or cuts off the power of the driving source (120) to the positioning part (170) so as to move the driving source (120) or stop the movement of the driving source (120).

## Description

The present invention relates to an image forming apparatus such as an electrophotographic printer. More particularly, the present invention relates to a skew adjusting apparatus capable of automatically adjusting a skew of a laser scanning unit (LSU) of an image forming apparatus, an image forming apparatus having such a skew adjusting apparatus and a skew adjusting method thereof.

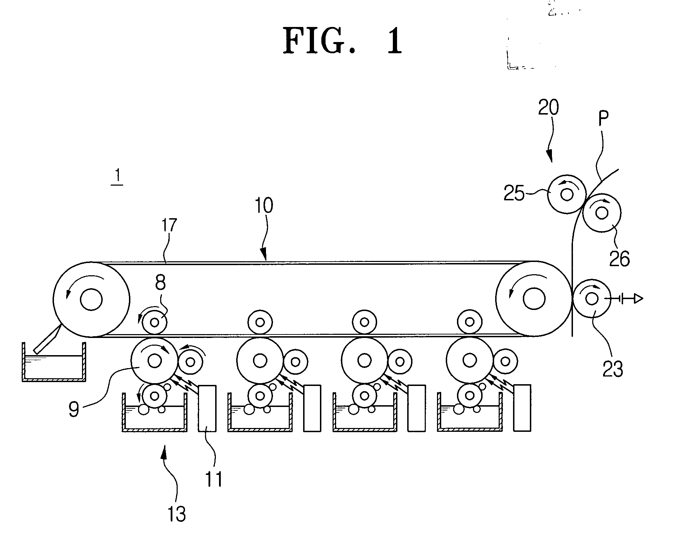

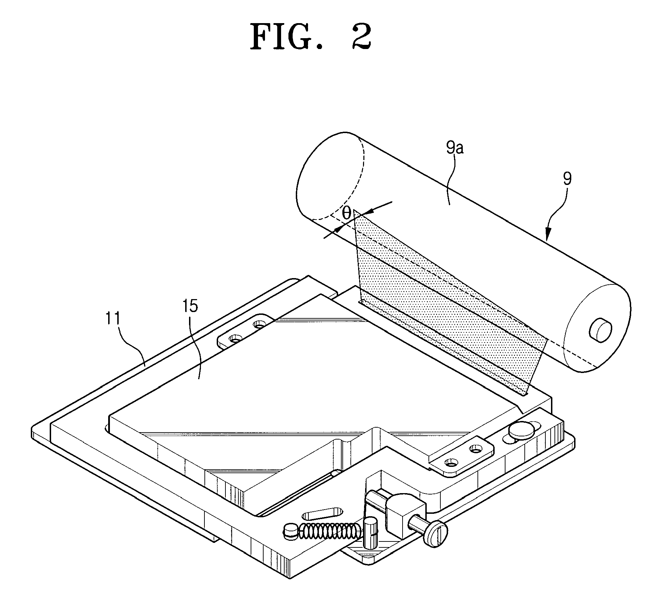

In general, as shown in Figures 1 and 2, an image forming apparatus such as a wet type color laser printer 1 comprises at least one LSU 11 for scanning light over the entire width of an image forming surface 9a (see Figure 2) of a photoconductor 9 such as a photoconductive drum. The LSU 11 forms an electrostatic latent image on the image forming surface 9a according to a print data inputted from an external appliance such as a computer. The electrostatic latent image formed by such an LSU 11 is developed into a toner image having a predetermined color as the electrostatic latent image passes through a developing unit. Then, the toner image is firstly transferred to an image transfer belt 17 by a first transfer roller 8 of a transfer unit 10 and then second transferred to a recording medium P such as a sheet of paper by a second transfer roller 23. The toner image transferred onto the medium P is fixed to the medium P by heat and pressure. Heat and pressure are applied from a heating roller 25 and a compressing roller 26 of a fixing unit 20, respectively, and then the medium P is discharged to the outside of the printer.

The print quality of a wet type color laser printer 1 varies depending on a positional precision of the electrostatic latent image. In particular, in order to print an image with a high degree of definition, it is important to precisely maintain the position of the LSU 11 in relation to the photoconductor 9.

For example, if the LSU 11 scanning light is skewed, rather than being aligned along the transverse direction of the photoconductor 9, as shown in Figure 2, the image finally printed on the recording medium P will also be skewed. That is, it is necessary for light projected from an optical system (not shown) housed in the LSU body 15 of the LSU 11 to be scanned parallel in relation to the transverse direction of the photoconductor 11 onto the image forming surface 9a of the photoconductor 9 as indicated by the dotted lines. If the light is scanned at a skewed angle θ, an electrostatic latent image formed on the photoconductor 9 will be skewed and the resulting image will also be skewed. Consequently, it is important to minimize errors caused by the skewed angle θ in order to provide parallel light scanning so that an image formed thereby shall not be skewed. In a color printer, if LSUs 11, which form electrostatic latent images respectively corresponding to four colors such as black, cyan, magenta and yellow, have skews different from each other, the images finally formed on the recording medium P will not be correctly matched with each other with respect to the print faces. Consequently, print quality of the image will deteriorate. Thus, it is important to align the respective skews of the LSUs 11 with each other and to minimize the skews.

In order to solve this problem, a conventional LSU 11 comprises a skew adjusting unit 30 for adjustably securing a LSU body 15 to a base frame (not shown).

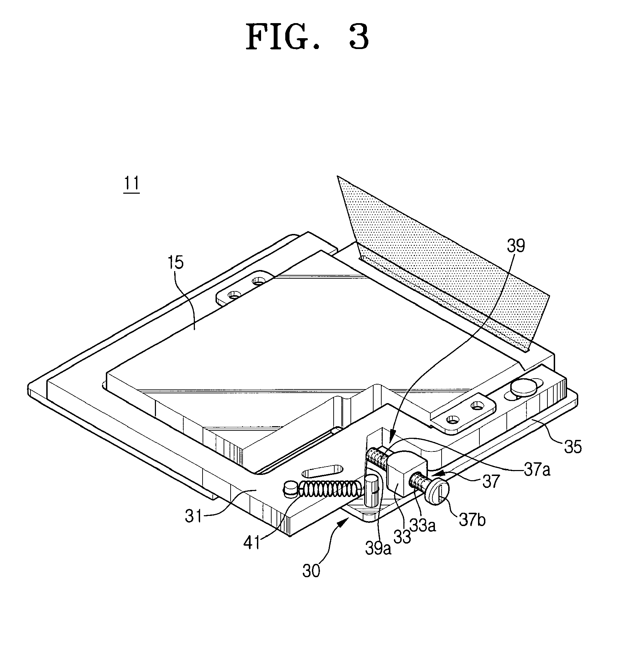

As shown in Figure 3, the skew adjusting unit 30 comprises an LSU anchoring plate 31, an adjusting guide groove 39, a sliding plate 35, a skew adjusting shaft 37, a shaft moving block 33, and a tension spring 41.

The LSU anchoring plate 31 has a top surface, on which an LSU body 15 is mounted. The LSU body 15 serves to scan light onto a photoconductor (not shown) and contains an optical system (not shown) including a light source, a rotating multi-sided mirror, a plurality of lenses and a plurality of mirrors.

An adjustment guide groove 39 is arranged on one side of the underside of the LSU anchoring plate 31. The adjustment guide groove 39 has a guide surface 39a having a predetermined skew angle.

The sliding plate 35 supports the LSU anchoring plate 31 in such a manner that the LSU anchoring plate 31 can rotate about a fixed axis (not shown) by a predetermined angle.

The skew adjusting shaft 37 is threaded into the shaft moving block 33 arranged on the sliding plate 35 adjacent to the adjustment guide groove 39. A first end 37a of the skew adjusting shaft 37 is configured to contact with the guide surface 39a of the adjustment guide groove 39 at a predetermined angle. A second end 37b of the skew adjusting shaft 37 includes a drive groove, so that a driver can rotate the skew adjusting shaft 37.

The shaft moving block 33 is provided with a thread hole 33a into which the skew adjusting shaft 37 is screwed. The thread hole 33a causes the first end 37a of the skew adjusting shaft 37 to move forwards or backwards along the guide surface 39a of the adjustment guide groove 39 depending on the rotating direction of the skew adjusting shaft 37.

The tension spring 41 serves to exert an elastic force to the LSU anchoring plate 31 in such a way that the guide surface 39a of the adjusting guide groove 39 in the LSU anchoring plate 31 moves into contact with the first end 37a of the skew adjusting shaft 37. The tension spring 41 is disposed between the LSU anchoring plate 31 and the sliding plate 35.

The skew adjusting unit 30 of the LSU 11, configured as described above, operates in the following manner.

First, when it is required to adjust a skew of a LSU 11, a user may insert a driver into a driver groove on the second end 37b of the skew adjusting shaft 37. Then, the skew adjusting shaft 37 is rotated in a desired direction.

For example, if it is desired to rotate the LSU body 15 clockwise, the user rotates the skew adjusting shaft 37 in a direction that causes the first end 37a of the skew adjusting shaft 37 to advance toward the adjustment guide groove 39 (toward the left side in Figure 3). As a result, the first end 37a of the skew adjusting shaft 37 pushes the guide surface 39a against the elastic force exerted by the tension spring 41. Thus, the LSU body 15 rotates clockwise.

To the contrary, if it is desired to rotate the LSU body 15 counterclockwise, the user rotates the skew adjusting shaft 37 in a direction that causes the first end 37a of the skew adjusting shaft 37 to retreat from the adjustment guide groove 39 (toward the right side in FIG. 3). As a result, the first end 37a of the skew adjusting shaft 37 releases the force exerted to the guide surface 39a. Consequently, the LSU body 15 rotates counterclockwise by the elastic force of the tension spring 41.

A conventional LSU 11 configured in this manner, however, has drawbacks. For example, in order to adjust a skew of the LSU body 15, the calculation of a rotation angle for rotating the skew adjusting shaft 37 and the rotation of the skew adjusting shaft 37 is typically performed manually.

More specifically, calculating a rotation angle for rotating the skew adjusting shaft 37 usually requires outputting an image of a predetermined pattern to measure a skew difference of a color with reference to a certain color such as black. This is called the skew value and is typically used to calculate a rotation angle for rotating the skew adjusting shaft 37.

Thereafter, it is required to manually rotate the skew adjusting shaft 37 by the calculated angle with a driver after the cover of a printer 1 is opened and another component unit 13 is removed to expose the skew adjusting shaft 37.

Since the rotating operation of the skew adjusting shaft 37 is generally performed manually by eye, skew differences are still present after the skew adjustment. Accordingly, it is necessary to repeat the skew adjustment in order to minimize the skew differences.

In addition, with conventional LSUs 11, because it is necessary to manually adjust a skew, it is impossible to configure a system for completely automatically correcting color registration even if the correction of offset or the like can be implemented with software.

In order to solve this problem, the skew adjusting shaft 37 may be automatically rotated by using a power source such as a motor. In this event, however, because a motor is typically used for each LSU 11, manufacturing costs increase.

Accordingly, there is a need for improved skew adjusting of an LSU, which would increase precision of skew adjustment, while reducing manufacturing costs thereof.

According to the present invention there is provided an apparatus and method as set forth in the appended claims. Preferred features of the invention will be apparent from the dependent claims, and the description which follows.

Exemplary embodiments of the present invention address some of the above problems and/or disadvantages. Accordingly, exemplary implementations of the exemplary embodiments of the present invention provide skew adjusting apparatus capable of automatically adjusting a skew of an LSU of an image forming apparatus, an image forming apparatus having such an automatic skew adjusting apparatus and a skew adjusting method.

According to an exemplary embodiment, there is provided a skew adjusting apparatus including a plurality of skew adjusting parts arranged in a plurality of laser scanning units, respectively. The automatic skew adjusting apparatus comprises a driving source, an actuating part arranged on a driving shaft of the driving source so that the actuating part selectively connects with one of the skew adjusting parts depending on a position to which the driving source moves. The actuating part actuates the skew adjusting part connected with the actuating part as the driving shaft rotates. A positioning part moves the driving source, and a power transmission part transmits or cuts off the power of the driving source to the positioning part so as to move the driving source or stop the movement of the driving source.

In another exemplary embodiment, each skew adjusting part may comprise a skew adjusting shaft which adjusts a skew of a corresponding one of the laser scanning units via rotation, and an adjusting gear is arranged on the skew adjusting shaft.

In another exemplary embodiment, the actuating part may comprise a plurality of worm gears vertically arranged to engage with the adjusting gear of each skew adjusting part.

In another exemplary embodiment, the positioning part may comprise a positioning shaft having a first end with a positioning thread part and a positioning block having a positioning thread hole. The positioning thread part may be received in or extracted from the positioning thread hole depending on the rotational direction of the positioning shaft. A position detection part detects an amount the driving source moves. It is preferable that the position detection part comprise a linear encoder.

In still another exemplary embodiment, the positioning part may further comprise a sliding guide to support the driving source and guide the movement of the driving source. A driving shaft guide may support the driving shaft of the driving source and guide the movement of the driving shaft.

In another exemplary embodiment, the power transmission part comprises a clutch to interconnect or cut off the positioning shaft and the driving shaft.

In yet another exemplary embodiment, the clutch comprises a first clutch plate connected to an end of the driving shaft in such a way of being capable of axially moving a predetermined distance. A second clutch plate is connected to a second end of the positioning shaft. An armature is arranged to move with the first clutch plate and a clutch coil generates magnetic force when electric current is applied to the clutch coil to move the armature. A clutch spring returns the first clutch plate to its original position when no electric current is applied to the clutch coil.

In another exemplary embodiment, automatic skew adjusting apparatus may further comprise a skew detection part which detects a skew of a laser scanning unit. The skew detection part may comprise two skew detection sensors located on a plane which extends vertically from a skew reference line to a running direction of one of a transfer belt, a photoconductive belt and a photoconductive drum. The skew detection sensors may be spaced from each other by a predetermined distance.

According to another exemplary implementation of the exemplary embodiments of the present invention, there is provided an image forming apparatus comprising a plurality of photoconductors, a plurality of scanning units which form an electrostatic latent image on the photoconductors, respectively, each scanning unit having a skew adjusting part, a plurality of developing units which develop the electrostatic latent image on the photoconductor into visible images, a transfer unit which transfers the images arranged on the respective photoconductors to a record medium, and an automatic skew adjusting unit which actuates the skew adjusting parts. The automatic skew adjusting unit comprises a driving source, an actuating part arranged on a driving shaft of the driving source so that the actuating part can selectively connect with one of the skew adjusting parts depending on a position to which the driving source moves. The actuating part actuates the skew adjusting part connected with the actuating part as the driving shaft rotates. A positioning part moves the driving source and a power transmission part transmits or cuts off the power of the driving source to the positioning part so as to move the driving source or stop the movement of the driving source. In another exemplary embodiment, each skew adjusting part may comprise a skew adjusting shaft which adjusts a skew of a corresponding one of the laser scanning units via rotation, and an adjusting gear arranged on the skew adjusting shaft.

In another exemplary embodiment, the actuating part comprises a plurality of worm gears vertically arranged to engage with the adjusting gear of each skew adjusting part.

In another exemplary embodiment, the positioning part comprises a positioning shaft having a first end with a positioning thread part, a positioning block having a positioning thread hole, the positioning thread part being received in or extracted from the positioning thread hole depending on the rotational direction of the positioning shaft, and a position detection part which detects an amount the driving source moves. The position detection part may also comprise a linear encoder.

In another exemplary embodiment, the positioning part may further comprise a sliding guide which supports the driving source and guides the movement of the driving source. A driving shaft guide supports the driving shaft of the driving source and guides the movement of the driving shaft.

In another exemplary embodiment, the power transmission part may comprise a clutch which interconnects or cuts off the positioning shaft and the driving shaft.

In another exemplary embodiment, the clutch may comprise a first clutch plate connected to an end of the driving shaft in such a way of being capable of axially moving by a predetermined distance and a second clutch plate connected to a second end of the positioning shaft. An armature is movably arranged with the first clutch plate, a clutch coil generates magnetic force when electric current is applied to the clutch coil to move the armature. A clutch spring returns the first clutch plate to its original position when no electric current is applied to the clutch coil.

In another exemplary embodiment, the automatic skew adjusting unit may further comprise a skew detection part which detects a skew of a laser scanning unit. The skew detection part may comprise two skew detection sensors located on a plane which extends vertically from a skew reference line to a running direction of a transfer belt, a photoconductive belt or a photoconductive drum. The skew detection sensors may be spaced from each other by a predetermined distance.

According to still another exemplary implementation of the exemplary embodiments of the present invention, there is provided a skew adjusting method for an image forming apparatus, the method comprising the steps of forming an image of a predetermined pattern on a medium by using a plurality of laser scanning units, measuring a skew of each laser scanning unit, calculating a skew adjusting value of a skew adjusting part of each laser scanning unit, and adjusting the skew adjusting part of each laser scanning unit by using a driving source according to the calculated skew adjusting value.

In another exemplary embodiment, the step of measuring the skew of each laser scanning unit may be performed by calculating a skew value by comparing time points of output skew detection signals for detecting an image from at least two skew detection sensors. The skew detection sensors detect an image after the image formed by the respective laser scanning unit has been transferred to an image carrier. The image carrier may be formed from a photoconductive belt, a transfer belt or a photoconductive drum.

In another exemplary embodiment, the step of measuring a skew of the each laser scanning unit comprises measuring, on the basis of a reference pattern for forming an image or an image of a certain color, a skew value of an image of a color different from the reference pattern or the certain color and formed on the record medium by using a microscope. In this event, measuring step is performed after the medium formed with an image formed thereon is discharged out of the image forming apparatus.

In another exemplary embodiment, the step of adjusting the skew adjusting part of each laser scanning unit may comprise connecting an actuating part for actuating the skew adjusting part with a skew adjusting part of an LSU to be adjusted, and adjusting the skew adjusting part of the LSU to be adjusted by operating the actuating part.

In another exemplary embodiment, the step of connecting the actuating part with the skew adjusting part of the LSU to be adjusted may comprise reading out the position of the actuating part, and determining whether the read-out position of the actuating part conforms to the position of the skew adjusting part of the LSU to be adjusted. Then, the actuating part is moved to a position where the actuating part is connected with the skew adjusting part of the LSU to be adjusted according to the read-out position of the actuating part.

The above and other objects, features, and advantages of certain exemplary embodiments of the present invention will be more apparent from the following description taken in conjunction with the accompanying drawings, in which:
Figure 1 is a diagrammatic view of a conventional wet type electrophotographic printer;
Figure 2 is a perspective view illustrating a skew phenomenon of a laser scanning unit of the wet type electrophotographic printer shown in Figure 1;
Figure 3 is a perspective view exemplifying a skew adjusting part of the laser scanning unit of the wet type electrophotographic printer shown in Figure 1;
Figure 4 is a perspective view of an automatic skew adjusting apparatus and a laser scanning unit according to an exemplary embodiment of the present invention, which are applicable to an image forming apparatus;
Figure 5 is a perspective view of the laser scanning unit shown in Figure 4;
Figure 6 is a partial front view exemplifying the positional relationship of an actuating part of the automatic skew adjusting apparatus shown in Figure 4;
Figure 7 is a view showing partially in cross-section a clutch of a positioning part of the automatic skew adjusting apparatus shown in Figure 4;
Figure 8 is a conceptive illustration exemplifying the positional relationship of first and second skew detection sensors of the automatic skew adjusting apparatus shown in Figure 4;
Figures 9A through 9G are front elevational views exemplifying the skew adjusting operation of the automatic skew adjusting apparatus shown in Figure 4; and
Figure 10 is a flowchart exemplifying a process of the skew adjusting operation of the automatic skew adjusting apparatus shown in Figure 4.

Throughout the drawings, the same drawing reference numerals will be understood to refer to the same elements, features, and structures.

The matters defined in the description such as a detailed construction and elements are provided to assist in a comprehensive understanding of the exemplary embodiments of the invention. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

An image forming apparatus such as, for example, a wet type color electrophotographic printer, performs print by processing print data transmitted from a computer (not shown). An automatic skew adjusting apparatus according to an exemplary embodiment of the present invention is applicable to such image forming apparatuses.

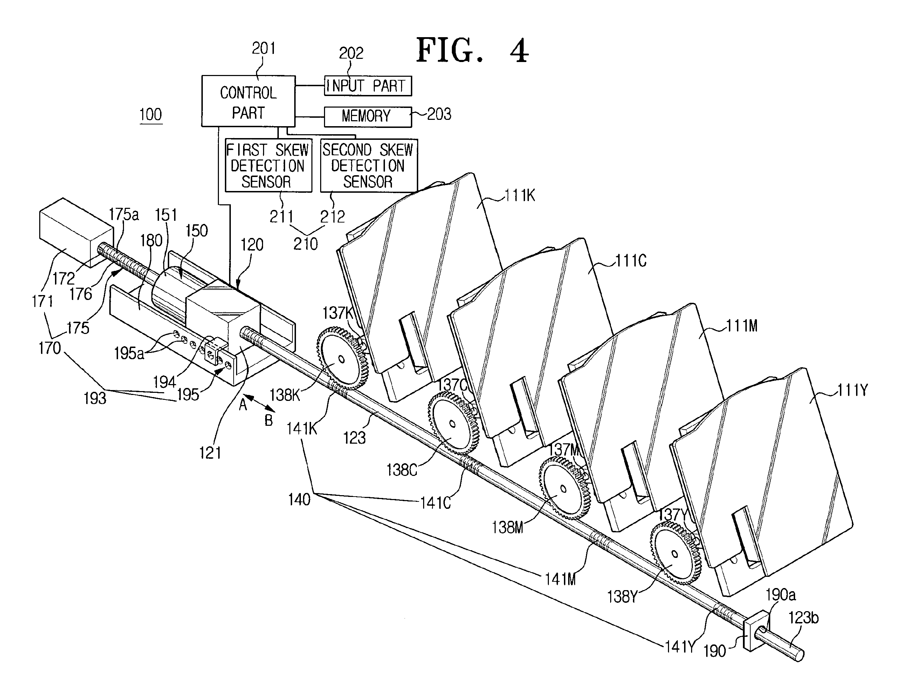

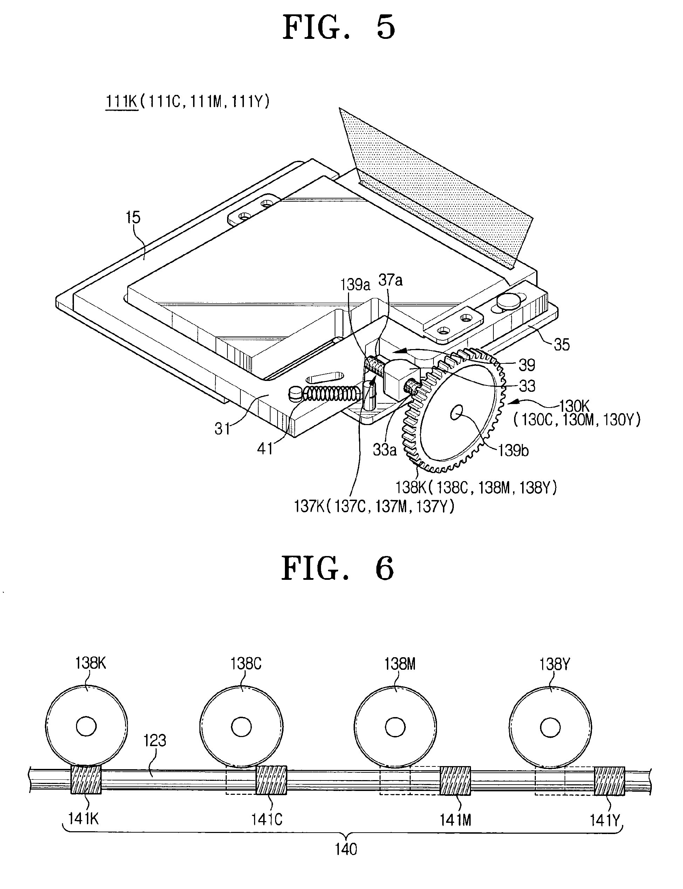

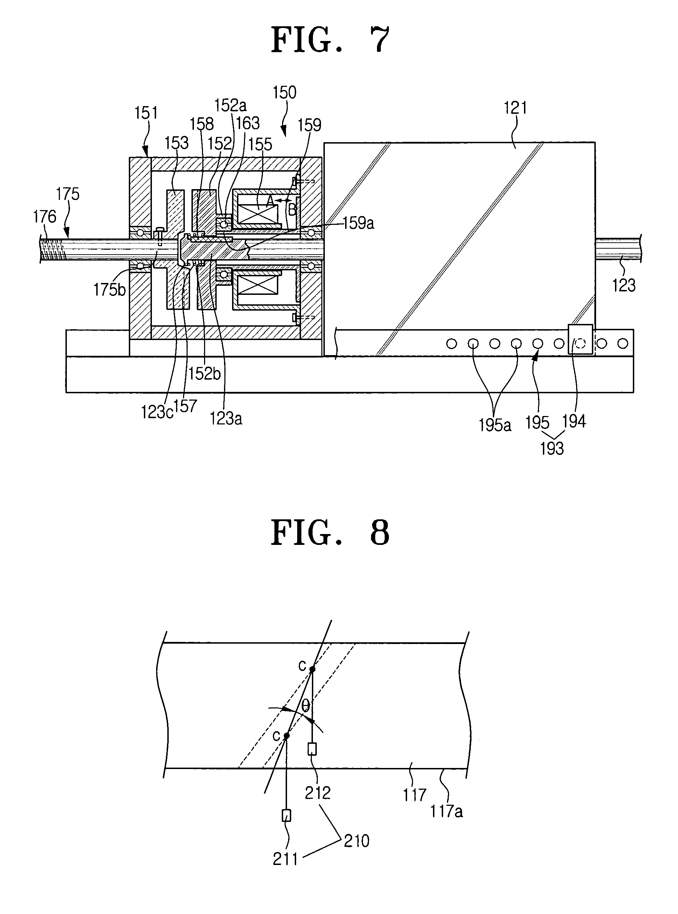

According to an exemplary embodiment, a wet type color electrophotographic printer comprises four photoconductors (not shown) which form toner images of four colors such as black, cyan, magenta and yellow, respectively. Additionally, the printer comprises four LSUs which form electrostatic latent images corresponding to four colors onto the photoconductors, respectively, for example, black, cyan, magenta and yellow LSU's 111K, 111C, 111M, 111Y (Figure 4), four developing units (not shown) which develop the electrostatic latent images into toner images of four colors, respectively, a transfer belt 117 (Figure 8) which transfers the toner images formed on the respective photoconductors onto a record medium such as a record paper, a fixing unit (not shown) which fixes the toner images transferred onto the record medium, a paper discharge unit (not shown) which discharges the record paper with the fixed toner images out of the printer, and an automatic skew adjusting apparatus 100 which automatically operates skew adjusting parts 130K, 130C, 130M, 130Y (Figure 5) for each one of the LSU's 111K, 111C, 111M, 111Y.

Beyond the automatic skew adjusting apparatus 100 and the LSUs 111K, 111C, 111M, 111Y, the construction and operation of the wet type color electrophotographic printer is substantially the same as with the conventional wet type color electrophotographic printer shown in FIG. 1 or other known wet type color electrophotographic printers and thus a more detailed description thereof will be omitted for purposes of clarity and conciseness.

Figure 4 schematically shows an automatic skew adjusting apparatus 100 in accordance with an exemplary embodiment of the present invention.

The automatic skew adjusting apparatus 100 comprises a driving source 120, an actuating part 140, a positioning part 170, a power transmission part 150 and a control part 201.

The driving source 120 comprises a single driving motor 121. The driving motor 121 comprises a driving shaft 123. The driving motor 121 is movably supported on a sliding guide 180 of the positioning part 170 to be described later.

The actuating part 140 serves to selectively actuate the skew adjusting parts 130K, 130C, 130M, 130Y (Figure 5) installed in the black, cyan, magenta and yellow LSU's 111K, 111C, 111M, 111Y, respectively, and comprises first, second, third and fourth worm gears 141K, 141C, 141M, 141Y arranged on the driving shaft 123.

The skew adjusting parts 130K, 130C, 130M, 130Y serve to adjust the skews of the LSUs 111K, 111C, 111M, 111Y, respectively, wherein the skew adjusting parts 130K, 130C, 130M, 130Y are arranged in the LSUs 111K, 111C, 111M, 111Y, respectively.

As shown in Figure 5, each skew adjusting part 130K, 130C, 130M or 130Y comprises an LSU anchoring plate 31, an adjustment guide groove 39, a sliding plate 35, a skew adjusting shaft 137K, 137C, 137M or 137Y, a shaft moving block 33, and a tension spring 41.

The construction of any one of the skew adjusting part 130K, 130C, 130M or 130Y may be analogous to that of the skew adjusting part 30 of a conventional LSU 11 described above with reference to Figure 3, except for being provided with one of the skew adjusting shafts 137K, 137C, 137M, 137Y. Further detailed description thereof is omitted for purposes of clarity and conciseness.

Each skew adjusting shaft 137K, 137C, 137M, 137Y comprises a first end 139a and a second end 139b. The first end 139a is configured to contact with the guide surface 39a of the adjustment guide groove 39 with a predetermined angle, for example, like the skew adjusting shaft 37 of the skew adjusting part 30 of the conventional LSU 11 described above with reference to Figure 3. Each second end 139b is formed with one of first, second, third and fourth adjusting gears 138K, 138C, 138M, or 138C vertically engaged with worm gears 141K, 141C, 141M, 141Y of the actuating part 140 of the skew adjusting apparatus, respectively.

The skew adjusting parts 130K, 130C, 130M, 130Y are constructed by arranging the adjusting gears 138K, 138C, 138M, 138Y in, for example, a skew adjusting part as shown in Figure 3, respectively. The skew adjusting parts 130K, 130C, 130M, 130Y can be constructed by arranging the adjusting gears 138K, 138C, 138M, 138Y with respect to other known skew adjusting parts (not shown) capable of adjusting a skew.

The first, second, third and fourth worm gears 141K, 141C, 141M, 141Y are vertically engaged with the first, second, third and fourth adjusting gears 138K, 138C, 138M, 138Y and have about the same width as each other.

In addition, the first, second, third and fourth worm gears 141K, 141C, 141M, 141Y are formed on the driving shaft 123 in such a way that they can be engaged with corresponding skew adjusting parts 130K, 130C, 130M and 130Y, one by one, according to the axial position of the driving shaft 123. That is, as shown in Figure 6, when the first worm gear 141K is engaged with the first adjusting gear 138K of the corresponding skew adjusting part 130K, the second warm gear 141C is arranged in a position spaced from the corresponding second adjusting gear 138C by a distance about equal to the width of the second worm gear 141C. The third worm gear 141M is arranged in a position spaced from the corresponding third adjusting gear 138M by about a distance equal to two times of the width of the third worm gear 141M, and the fourth worm gear 141Y is arranged in a position spaced from the corresponding third adjusting gear 138Y by a distance about equal to three times of the width of the third worm gear 141Y.

The positioning part 170 serves to move the driving motor 121 so that each worm gear 141K, 141C, 141M or 141Y of the actuating part 140 selectively connects to a corresponding one of the first, second, third and fourth adjusting gears 138K, 138C, 138M or 138Y of a corresponding skew adjusting part 130K, 130C, 130M or 130Y. The positioning part 170 comprises a positioning shaft 175, a positioning block 171 and a position detection part 193.

The positioning shaft 175 comprises a first end 175a having a positioning thread part 176 and a second end 175b including a driven clutch plate 153 which forms a clutch of a power transmission part 150 to be described later.

The positioning block 171 has a positioning thread hole 172 engaged with the positioning thread part 176. The positioning block 171 is secured to a main frame (not shown) of the printer.

The positioning thread part 176 may be partially engaged with the positioning thread hole 172 for support. Therefore, when the positioning thread part 176 is connected with the driving shaft 123 by the clutch 151 of the power transmission part 150 to be described later, the positioning shaft 175 is inserted into or extracted out of the positioning thread hole 172 according to the rotating direction thereof and moves in a direction indicated by arrow A or B of Figure 4.

In addition, the thread pitch of the positioning thread part 176 and the positioning thread hole 172 may be defined so that they are about equal to the thread pitch provided between the first, second, third and fourth worm gears 141K, 141C, 141M, 141Y and the first, second, third and fourth adjusting gears 138K, 138C, 138M, 138Y. This prevents the first, second, third or fourth worm gear 141K, 141C, 141M or 141Y, which move in the direction indicated by arrow A or B in Figure 4 while being rotated along with the driving shaft 123, from rotating or moving the first, second, third or fourth adjusting gear 138K, 138C, 138M or 138 Y. The adjusting gears 138K, 138C, 138M or 138 Y are engaged with the first, second, third or fourth worm gear 141K, 141C, 141M or 141Y, respectively, in the direction indicated by arrow A or B in Figure 4, when the positioning shaft 175 is moved in the direction indicated by arrows A or B of Figure 4, due to threadable engagement between the positioning thread part 176 and the positioning thread hole 172 while the positioning shaft 175 is rotating.

The position detection part 193 serves to obtain positional information when the driving motor 121 is moved by the positioning part 170. The position detection part 193 comprises a linear encoder.

The linear encoder comprises a sensing hole part 195 and a photosensor 194. The sensing hole part 195 comprises a plurality of holes 195a formed on a side wall of the sliding guide 180 with a predetermined space in the direction of moving the driving motor 121. The photosensor 194 is located at a side part of the driving motor 121 opposite to the sensing hole part 195. The photosensor 194 comprises a light emission part and a light reception part and generates a high or low signal due to the holes 195a formed on the sliding guide 180 as the driving motor 121 is moved left or right by the positioning shaft 175 and the positioning block 171 of the positioning part 170.

Alternatively, the linear encoder may comprise a film sheet (not shown) formed with marks in a predetermined space from each other and located on a side wall of the sliding guide 180, and a photosensor (not shown) located on a side wall of the driving motor 121.

In addition, the linear encoder may comprise a bar (not shown) alternately coated with magnetic materials of N and S poles and located on a side wall of the sliding guide wall 180, and a hall sensor (not shown) mounted on the side wall of the driving motor 121.

Therefore, when the driving motor 121 is moved left and right as indicated by arrows A, B in Figure 4 by the positioning shaft 175 and the positioning block 171 at the time of printing, the linear encoder outputs a high or low signal to a control part 201, and the control part 201 counts outputted high signals to calculate the moved position of the driving motor 121, that is the position of the actuating part 140. The calculated positional information of the actuating part is stored in a memory 203.

The positioning part 170 may further comprise a sliding guide 180 for securing the driving motor 121 and guiding the movement of the driving motor 121, and a driving shaft guide 190 which supports the driving shaft 123 and guides the movement of the driving shaft 123. The driving sliding guide 180 may be manufactured from a plate having a substantially "C" shaped cross-section and secured to the main frame. The driving shaft guide 190 includes a receiving hole 190a which receives and supports the second end 123b of the driving shaft 123 and is secured to the main frame of the printer.

The sliding guide 180 guides the movement of the driving motor 121. The driving motor 121 moves along with the positioning shaft 175 as the positioning shaft 175 is inserted into or extracted from the positioning thread hole 172. The driving motor 121 moves left or right as indicated by arrows A, B in Figure 4 according to the rotating direction of the driving shaft 123 after the positioning shaft has been connected with the driving shaft 123 by the power transmission part 150.

The power transmission part 150 serves to transmit the power of the driving motor 121 to the positioning part 170 so that the positioning part 170 can move the driving motor 121. The power transmission part 150 comprises a clutch 151.

The clutch 151 interconnects or cuts off the positioning shaft 175 and the driving shaft 123.

The clutch 151 comprises a driving clutch plate 152, a driven clutch plate 153, an armature 159, a clutch coil 155, and a clutch spring 157.

The driving clutch plate 152 is secured to the first end 123a of the driving shaft 123 by a guide key 158 in such a way that the driving clutch plate 152 can be axially moved over a predetermined distance as well as rotated along with the driving shaft 123. The driven clutch plate 153 is secured to the second end 175b of the positioning shaft 175 by a fastener, for example, a screw.

The armature 159 may be formed from a cylindrical tube and connected to the driving clutch plate 152 via a bearing. Thus, the armature can move in the axial direction which is indicated by arrow A or B in Figure 7 along with the clutch plate 152. Because the bearing 163 is tightly interposed between a ridge 159a arranged on the armature 159 and a protruded tube 152a of the driving clutch plate 152, the armature 159 does not rotate along with the driving shaft 123.

When electric current is applied to the clutch coil 155, the clutch coil 155 generates magnetic force to draw the armature 159 in the direction indicated by arrow A in Figure 7. This makes the driving clutch plate 152 move into contact with the driven clutch plate 153.

The clutch spring 157 is interposed between a first supporting ridge 123c arranged on the tip of the first end 123a of the driving shaft 123 and a second supporting ridge 152b arranged on the internal circumferential surface of the driving clutch plate 152. The clutch spring 157 separates the driving plate 152 from the driven clutch plate 153 and returns the driving clutch plate 152 to its original position when electric current applied to the clutch coil 155 is cutoff. Consequently, magnetic force is lost.

The control part 201 calculates one or more skew adjusting values each required to adjust corresponding ones of the skew adjusting parts 130K, 130C, 130M, 130Y of the respective LSUs 111K, 111C, 111M, 111Y according to the first and second skew detection signals outputted from the first and second skew detection sensors 211, 212 of the skew detection part 210. The control part 201 controls the operation of the driving motor 121 and the clutch 151 according to the adjusted skew values.

Specifically, as shown in Figure 8, the first and second skew detection sensors 211, 212 are located to be spaced from each other in a plane extending from a skew reference line L, which is vertical to a running direction of a transfer belt 117. Thus, the skew detection sensors 211, 212 face the opposite edges of an image forming surface 117a from the underneath of the transfer belt 117. Accordingly, the first and second skew detection sensors 211, 212 detect toner images of respective colors of a predetermined pattern such as a straight line transferred onto the transfer belt 117 at two positions C, C' on the skew reference line L. Meanwhile, the toner images transferred onto the transfer belt 117 are being moved to a second transfer roller (not shown), and then output first and second skew detection signals for respective colors to the control part 201. At this time, if a certain LSU 111K, 111C, 111M or 111Y is skewed at an angle θ, the time point that the first skew detection sensor 211 detects a toner image of a corresponding LSU and outputs the first skew detection signal becomes different from the time point that the second skew detection sensor 212 outputs the second skew detection signal as indicated by dotted lines in Figure 8. Therefore, the control part 201 compares the time points of outputting the first and second skew signals and calculates the skew values of the respective LSUs 111K, 111C, 111M, 111Y on the basis of the difference in time point of outputting the first and second skew detection signals. After calculating the skew values of the respective LSUs 111K, 111C, 111M, 111Y, the control part 201 calculates the skew adjusting values for each respective LSU 111K, 111C, 111M, 111Y, for example, the rotation angles K, C, M, Y required for rotating the first, second, third and fourth adjusting gears 138K, 138C, 138M, 138Y of the respective skew adjusting parts 130K, 130C, 130M, 130Y. The control part 201 controls the operations of the driving motor 121 and the clutch 151 according to the calculated rotation angles K, C, M, Y.

In this embodiment, although it has been illustrated that the control part 201 calculates with software the rotation angles K, C, M, Y required for rotating the first, second, third and fourth adjusting gears 138K, 138C, 138M, 138Y of the respective skew adjusting parts 130K, 130C, 130M, 130Y on the basis of the first and second skew detection signals of the first and second skew detection sensors 211, 212, it is possible for a user to directly measure the rotation angles after a recording medium formed with an image is discharged out of the printer.

For example, using a reference pattern as a basis for skew measurement, the user measures differences in skew. For example, skew values of other colors from an image of a predetermined pattern outputted onto a recording medium can be calculated using a microscope. Then, on the basis of the measured skew values, the rotation angles K, C, M, Y required for rotating the first, second, third and fourth adjusting gears 138K, 138C, 138M, 138Y of the respective skew adjusting parts 130K, 130C, 130M, 130Y to adjust the skews of the respective LSU 111K, 111C, 111M, 111Y and then inputs the calculated rotation angles K, C, M, Y of the respective LSU 111K, 111C, 111M, 111Y through an input part 202 of a control panel (not shown). If so, the control part 201 controls the operations of the driving motor 121 and the clutch 151 according to the inputted rotation angles K, C, M, Y.

In the above description, although it has been exemplified and described that the inventive automatic skew adjusting apparatus 100 is applied to a wet type color electrophotographic printer having a transfer unit with a transfer belt 117 for transferring toner images formed on respective photoconductors, and a fixing unit for fixing toner images transferred to a recording medium, the present invention is not limited to this and can be applied to other types of printers. For example, the inventive automatic skew adjusting apparatus 100 can be applied to a printer (not shown) which employs a photoconductive belt (not shown) instead of a photoconductive drum as a photoconductor and includes a fixing unit (not shown) or a transfer/fixing unit (not shown) which directly transfers and fixes a toner image from the photoconductive belt to a recording medium without a transfer unit having a transfer belt 117, with similar principles and constructions. Furthermore, the inventive automatic skew adjusting apparatus 100 can also be applied to a printer (not shown) which employs a photoconductive drum as a photoconductor and includes a fixing unit (not shown) or a transfer/fixing unit (not shown) which directly transfers and fixes an image formed on the photoconductive drum (not shown) to a recording medium without intervention of a transfer belt 117.

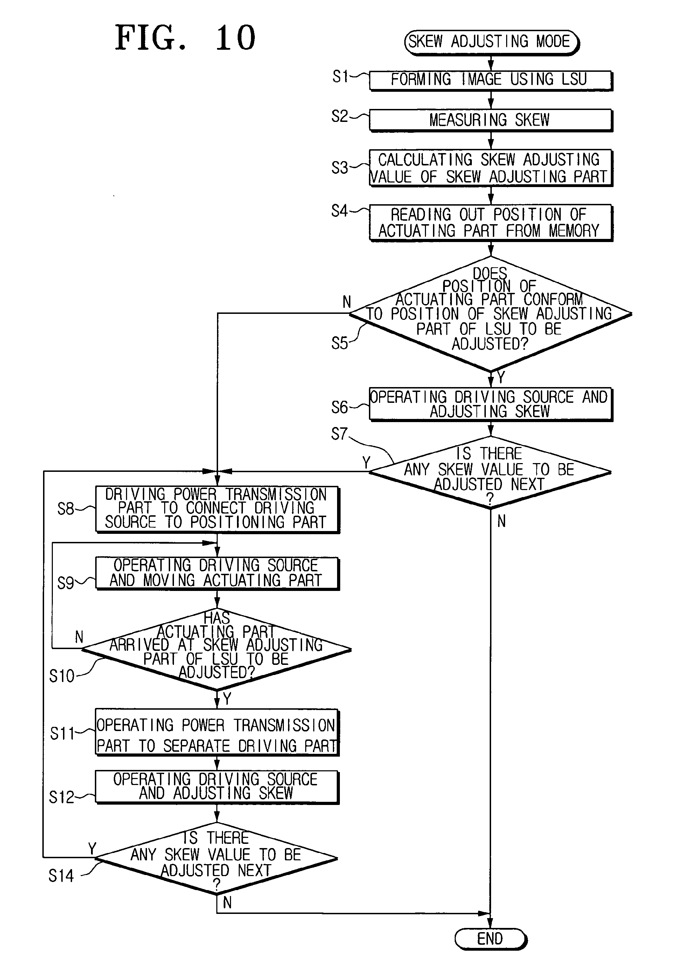

According to an exemplary embodiment, a skew adjusting method, for an image forming apparatus such as a wet type color electrophotographic printer comprising an automatic skew adjusting apparatus 100 configured is described below in detail with reference to Figures 4 through 10.

When a print command is given, each of the photoconductors for forming one of the four colors is charged with a layer of electric charge of a predetermined pattern such as a straight line corresponding to an image, for example, an electrostatic latent image, to be printed by a corresponding one of the respective black, cyan, magenta and yellow LSU 111K, 111C, 111M, 111Y. Then, liquid developer is deposited as a layer of developer with a high quantity of toner onto an area formed with the electrostatic latent image, and developed into toner images by a developing roller (not shown) of a developing unit (S1) .

The toner images each formed on a corresponding photoconductor by the developing unit are transferred to the transfer belt 117 by a first transfer roller (not shown) of a transfer unit and then moved to a second transfer roller by the transfer belt 117.

At this time, the first and second skew detection sensors 211, 212 detect each color toner image of the predetermined pattern transferred to the transfer belt, and output first and second skew detection signals for each color to the control part 201. The control part 201 compares outputting time points of the first and second signals for each color to calculate a skew value for each LSU on the basis of the difference between the outputting time points of the first and second skew detection signals (S2). The a skew adjusting value is calculated which may be adjusted through each skew adjusting part 130K, 130C, 130M or 130Y on the basis of the calculated skew value, that is, each of the rotation angles K, C, M, Y of the first, second, third and fourth adjusting gears 138K, 138C, 138M, 138Y (S3).

At this time, the toner images moved to the second transfer roller are transferred to a medium P by the second transfer roller, fixed on the recording medium by a fixing roller (not shown) of a fixing unit, and then discharged out of the printer by a paper discharge roller of a paper discharge unit.

After medium P is discharged out of the printer, the control part 201 reads out the positional information of the actuating part 140 previously stored in the memory 203 (S4) .

Next, the control part 201 determines whether the position of the actuating part 140 read out from the memory 203 corresponds to that for a certain one of the respective LSU 111K, 111C, 111M, 111Y to be adjusted, for example to a first position for actuating the skew adjusting part 130K of the black LSU 111K (S5). Here, the first position is the position where the first worm gear 141K of the actuating part 140 arranged on the driving shaft 123 of the driving motor 121 is engaged with the first adjusting gear 138K of the skew adjusting part 130K which adjusts the skew of the black LSU 111K.

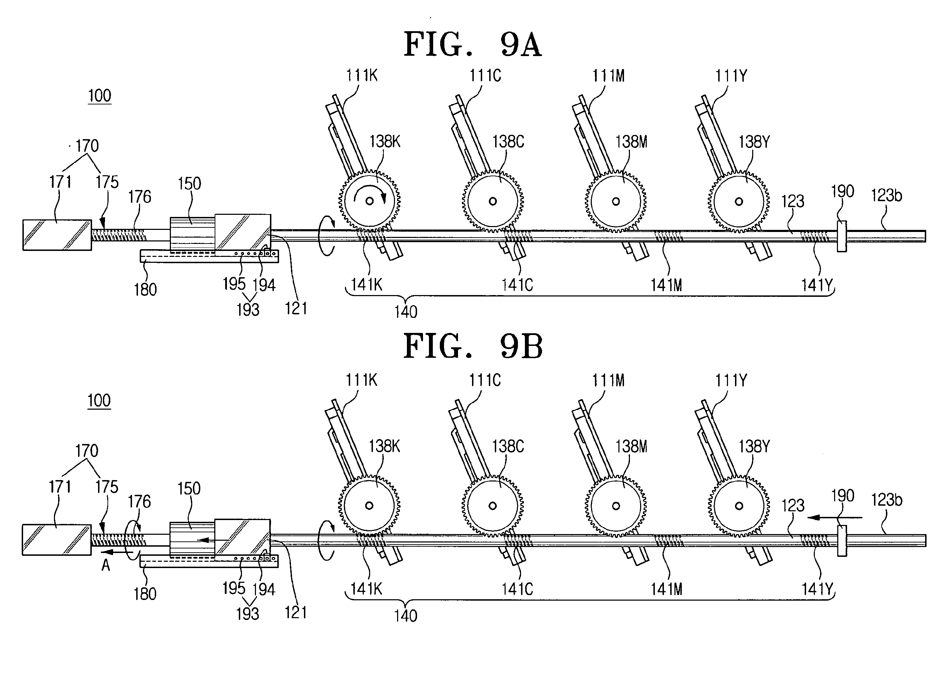

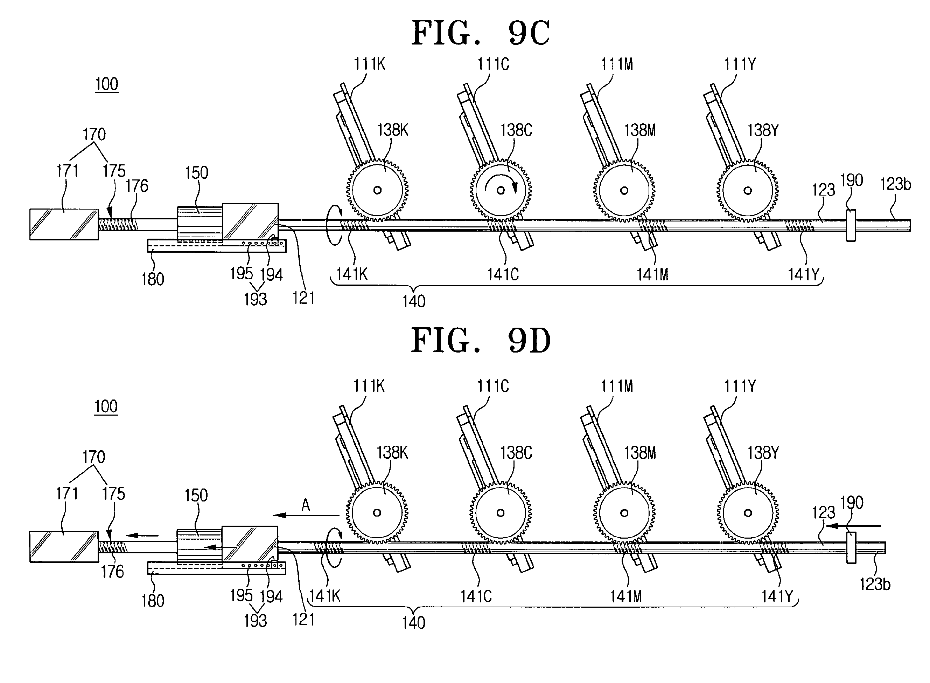

As a result, when it is determined that the position of the actuating part 140 read out from the memory 203 is the first position, the control part 201 rotates the driving motor 121 clockwise or counterclockwise by a predetermined angle according to the calculated rotation angle K, while the clutch 151 is in OFF state, as shown in Figure 9A.

As the driving motor 121 rotates, the first worm gear 141K arranged on the driving shaft 123 rotates, as a result of which the first adjusting gear 138K of the black skew adjusting part 130K engaged with the first worm gear 141K also rotates by a corresponding rotation angle K (S6).

When the skew adjustment for the black LSU 111K is completed in this manner, the control part 201 judges whether any other LSU needs adjustment (S7).

As a result, for example, if it is determined that the cyan LCU 138C is required to be adjusted among the remaining LSUs 111C, 111M, 111Y, the control part 201 turns the clutch 151 of the positioning part 150 ON, so as to move the actuating part 140 provided on the driving shaft 123 to a second position as shown in Figure 9B(S8). Here, the second position is the position where the second worm gear 141C of the actuating part is engaged with the second adjusting gear 138C for adjusting the skew of the cyan LSU 111C.

As the clutch 151 is turned ON, electric current is applied to the clutch coil 155 so that the clutch coil 155 generates magnetic force, whereby the armature 159 is moved to the left side, such as in the direction indicated by arrow A in Figure 7. As a result, the driving clutch plate 152 engages with the driven clutch plate 153 against the force exerted by the clutch spring 157, whereby the power of the driving shaft 123 can be transmitted to the positioning shaft 175. From this state, when the driving motor 121 rotates in one direction, for example, clockwise, the positioning thread part 176 of the positioning shaft 175 moves to the left side, for example, in the direction indicated by arrow A in Figure 9B while being inserted into the positioning thread hole 172 (S9).

At this time, the photosensor 194 of the position detection part 193 provided at one side of the driving motor 121 generates and outputs high and low signals to the control part 201 due to the holes 195a formed in the sensing hole part 195 provided on the sliding guide 180. The control part 201 counts the high signals of the photosensor 194 to calculate the moved position of the driving motor 121 and determines whether the present position of the actuating part 140 is the second position or not (S10).

Thereafter, when it is determined that the actuating part 140 arrives at the second position, the control part 201 turns the clutch 151 OFF. As the clutch 151 is turned OFF, no electric current is applied to the clutch coil 155 and thus the magnetic force is lost. Then, the armature 159 is moved in the direction indicated by arrow B in Figure 7 by the clutch spring 157. As a result, the driving clutch plate 152 separates from the driven clutch plate 153 and the power of the driving shaft 123 cannot be transmitted to the positioning shaft 175 (S11).

From this state, the driving motor 121 rotates clockwise or counterclockwise by a predetermined angle according to the rotation angle C calculated for the cyan LSU 111C. As the driving motor 121 rotates, the second worm gear 141C formed on the driving shaft 123 also rotates, and the second adjusting gear 138C of the skew adjusting part 130C engages with the second worm gear 141C for rotation by an angle corresponding to the rotation angle C of the cyan LSU 111C (S12).

When the skew adjustment for the cyan LSU 111C is completed, the control part 201 determines whether there is any LSU to be adjusted next (S14).

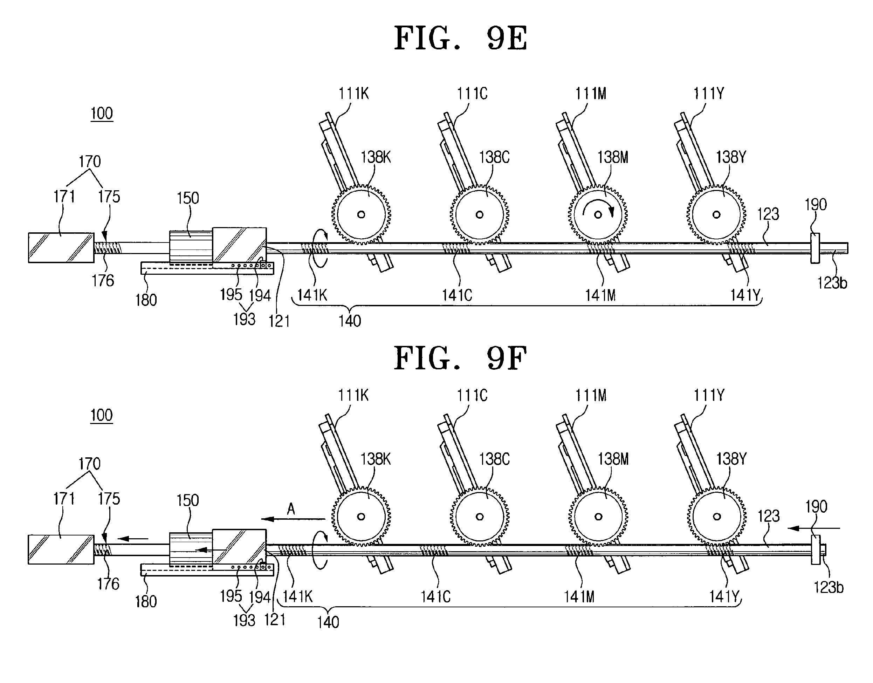

As a result, if it is determined that an LSU 111M or 111Y, for example, the magenta LSU 111M is required to be adjusted, as shown in Figures 9D and 9E, the control part 201 moves the actuating part to a third position and then rotates the driving motor clockwise or counterclockwise by a predetermined angle according to the rotation angle C calculated for the magenta LSU 111M in the same manner as above-mentioned steps S8-S12. Here, the third position is the position where the third worm gear 141M of the actuating part 141 engages with the third adjusting gear 138M for adjusting skew of the magenta LSU 111M.

When the skew adjustment for the magenta LSU 111M is completed, the control 201 determines again whether any LSU to be adjusted next is present or not (S14).

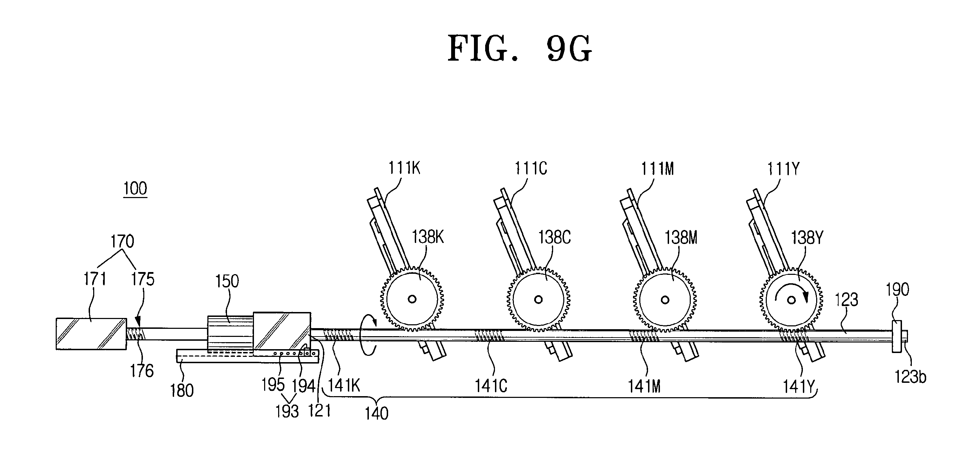

As a result, when it is determined that an LSU, for example, the yellow LSU 111Y is required to be adjusted, as shown in Figures 9F and 9G, the control part 201 moves the actuating part to a fourth position and then rotates the driving motor clockwise or counterclockwise by a predetermined angle according to the rotation angle Y calculated for the yellow LSU 111Y in the same manner as above-mentioned steps S8-S12. Here, the fourth position is the position where the fourth worm gear 141Y of the actuating part 141 engages with the fourth adjusting gear 138Y for adjusting skew of the yellow LSU 111Y.

Thereafter, when the skew adjustment is completed for the yellow LSU 111Y, the control part 201 determines again whether any LSU to be adjusted next is present or not (S14) .

If it is determined that there is no LSU to be adjusted anymore as the result of determinations in steps S7 and S14, the control part 201 stores the present position of the actuating part 140 in the memory 203 and completes the adjusting operation, or returns again the position of the actuating part 140 to the first position by moving the driving motor 121 through the positioning part 170, then stores the position of the actuating part 140 in the memory 203 and then completes the adjusting operation.

As described above, the exemplary embodiments of the present invention provide automatic adjustment for a skew of LSU body. Therefore, the time required for skew adjustment can be reduced and the degree of precision of skew adjustment can be relatively improved when compared to the manual skew adjustment.

In addition, according to the exemplary embodiments of the present invention, it is possible to construct a system for fully automatically correcting color registration if the correction of offset or the like is automatically implemented.

Furthermore, according to the exemplary embodiments of the present invention, it is possible to adjust skews of LSUs each forming an electrostatic latent image for corresponding one of the four colors by using a single motor. Therefore, the manufacturing costs can be reduced as compared to the case in which a separate motor is provided for each skew actuating part of an LSU, and the construction can be simplified because no large installation space and complicated wiring are needed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A skew adjusting apparatus (100) for an image forming apparatus including first and second laser scanning units (111) having first and second skew adjusting parts (130), respectively, the skew adjusting apparatus (100) comprising:
a driving source (120) comprising a driving shaft (123); and
an actuating part (140) arranged on the driving shaft (123);
wherein the actuating part (140) selectively connects with one of the first and second skew adjusting parts (130) to actuate the one of the first and second skew adjusting parts (130) as the driving shaft (123) rotates.

2. The skew adjusting apparatus (100) as claimed in claim 1, further comprising:
a positioning part (170) which moves the driving source (120); and
a power transmission part (150) which transmits or cuts off the power of the driving source (120) to the positioning part (170) so as to move the driving source (120) or stop the movement of the driving source (120).

3. The skew adjusting apparatus (100) as claimed in claim 1, wherein
at least the one of the first and second skew adjusting parts (130) comprises a skew adjusting shaft (137) which adjusts a skew of a corresponding one of the first and second laser scanning units (111) via rotatation; and
an adjusting gear (138) is arranged on the skew adjusting shaft (137).

4. The skew adjusting apparatus (100) as claimed in claim 3, wherein the actuating part (140) comprises a plurality of worm gears (141) arranged to vertically engage with the adjusting gear (138).

5. The skew adjusting apparatus (100) as claimed in claim 2, wherein the positioning part (170) comprises:
a positioning shaft (175) comprising a first end including a positioning thread part (176);
a positioning block (171) comprising a positioning thread hole (172), the positioning thread part (176) being received in or extracted from the positioning thread hole (172) depending on the rotational direction of the positioning shaft (175); and
a position detection part (193) which detects an amount by which the driving source (120) moves.

6. The skew adjusting apparatus (100) as claimed in claim 5, wherein the position detection part (193) comprises a linear encoder.

7. The skew adjusting apparatus (100) as claimed in claim 5, wherein the positioning part (170) further comprises:
a sliding guide (180) which supports the driving source (120) and guides the movement of the driving source (120); and
a driving shaft guide (190) which supports the driving shaft (123) of the driving source (120) and guides the movement of the driving shaft (123).

8. The skew adjusting apparatus (100) as claimed in any preceding claim, wherein the power transmission part (150) comprises a clutch (151) which interconnects or cuts off power to the positioning shaft (175) and the driving shaft (123).

9. The skew adjusting apparatus as claimed in claim 8, wherein the clutch (151) comprises:
a first clutch plate (152) connected to an end of the driving shaft (123), the first clutch plate (152) being axially movable by a predetermined distance;
a second clutch plate (153) connected to a second end of the positioning shaft (175);
an armature (159) arranged to move with respect to the first clutch plate (152);
a clutch coil (155) which generates magnetic force when electric current is applied to the clutch coil (155) to move the armature (159); and
a clutch spring (157) which returns the first clutch plate (152) to its original position when no electric current is applied to the clutch coil (155).

10. The skew adjusting apparatus (100) as claimed in any preceding claim, further comprising a skew detection part (210) which detects a skew of a laser scanning unit.

11. The skew adjusting apparatus (100) as claimed in claim 10, wherein the skew detection part (210) comprises two skew detection sensors (211, 212) located on a plane which extends vertically from a skew reference line to a running direction of one of a transfer belt (117), a photoconductive belt and a photoconductive drum, the skew detection sensors (211, 212) being spaced from each other by a predetermined distance.

12. An image forming apparatus comprising:
a plurality of scanning units (111), each scanning unit (111) comprising a skew adjusting part (130); and
a skew adjusting unit (100) which actuates the skew adjusting parts (130), wherein the skew adjusting unit (100) comprises:
a driving source (120) comprising a driving shaft (123); and
an actuating part (140) arranged on the driving shaft (123);
wherein the actuating part (140) selectively connects with the skew adjusting part (130) of a corresponding one of the plurality of scanning units (111) actuating the skew adjusting part (130) as the driving shaft (123) rotates.

13. The image forming apparatus as claimed in claim 12 wherein
the plurality of scanning units (111) form an electrostatic latent image on a plurality of photoconductors, respectively.

14. The image forming apparatus as claimed in claim 12 further comprising
a plurality of developing units which develop the electrostatic latent image on the photoconductor into visible images;
a transfer unit which transfers the images arranged on the respective photoconductors to a medium.

15. The image forming apparatus as claimed in claim 12 further comprising
a positioning part (170) which moves the driving source (120); and
a power transmission part (150) which transmits or cuts off the power of the driving source (120) to the positioning part (170) so as to move the driving source (120) or stop the movement of the driving source (120).

16. The image forming apparatus as claimed in claim 12, wherein each skew adjusting part (130) comprises:
a skew adjusting shaft (137) which adjusts a skew of the corresponding one of the laser scanning units (111) via rotation; and
an adjusting gear (138) arranged on the skew adjusting shaft (137).

17. The image forming apparatus as claimed in claim 16, wherein the actuating part (140) comprises a plurality of worm gears (141) arranged to vertically engage with the adjusting gear (138).

18. The image forming apparatus as claimed in claim 13, wherein the positioning part (170) comprises:
a positioning shaft (175) comprising a first end with a positioning thread part (176);
a positioning block (171) comprising a positioning thread hole (172), the positioning thread part (176) being received in or extracted from the positioning thread hole (172) depending on the rotational direction of the positioning shaft (175); and
a position detection part (193) which detects an amount by which the driving source (120) moves.

19. The image forming apparatus as claimed in claim 18, wherein the position detection part (193) comprises a linear encoder.

20. The image forming apparatus as claimed in claim 13, wherein the positioning part (170) further comprises a sliding guide (180) which supports the driving source (120) and guides the movement of the driving source (120); and
a driving shaft guide (190) which supports the driving shaft (123) of the driving source (120) and guides the movement of the driving shaft (123).

21. The image forming apparatus as claimed in claim 18, wherein the power transmission part (150) comprises a clutch (151) which interconnects or cuts off the positioning shaft (175) and the driving shaft (123).

22. The image forming apparatus as claimed in claim 21, wherein the clutch (151) comprises:
a first clutch plate (152) connected to an end of the driving shaft (123), the first clutch plate (152) being axially movable by a predetermined distance;
a second clutch plate (153) connected to a second end of the positioning shaft (175);
an armature (159) arranged to move with the first clutch plate (152);
a clutch coil (155) which generates magnetic force when electric current is applied to the clutch coil (155) to move the armature (159); and
a clutch spring (157) which returns the first clutch plate (152) to its original position when no electric current is applied to the clutch coil (155).

23. The image forming apparatus as claimed in claim 12, further comprising:
a skew detection part (210) which detects a skew of a laser scanning unit (111).

24. The image forming apparatus as claimed in claim 23, wherein the skew detection part (210) comprises two skew detection sensors (211, 212) located on a plane which vertically extends from a skew reference line vertical to a running direction of one of a transfer belt (117), a photoconductive belt and a photoconductive drum, the skew detection sensors (211, 212) being spaced from each other by a predetermined distance.

25. A skew adjusting method for use with an image forming apparatus having a plurality of laser scanning units (111), the method comprising;
measuring a skew of at least one of the plurality of laser scanning units (111);
calculating a skew adjusting value of a skew adjusting part (130) of the at least one laser scanning unit (111); and
selectively adjusting the skew adjusting part (130) of the at least one laser scanning unit (111) using a driving source (120) according to the calculated skew adjusting value.

26. The skew adjusting method as claimed in claim 25, wherein the measuring step comprises calculating a skew value by comparing time points of outputting skew detection signals for detecting an image from at least two skew detection sensors (211, 212).

27. The skew adjusting method as claimed in claim 25, wherein the measuring step comprises measuring, on the basis of a reference pattern for forming an image or an image of a certain color, a skew value of an image of a color different from the reference pattern of the certain color and formed on the medium by using a microscope.

28. The skew adjusting method as claimed in claim 25, wherein the selectively adjusting step comprises:
selectively connecting an actuating part (140) of the driving source (120) with the skew adjusting part (130) of the least one laser scanning unit (111); and
adjusting the skew adjusting part (130) of the LSU to be adjusted by operating the actuating part (140) of the driving source (120).

29. The skew adjusting method as claimed in claim 24, wherein the selectively connecting step comprises:
reading out the position of the actuating part (140);
determining whether the read-out position of the actuating part (140) conforms to the position of the skew adjusting part (130) of the at least one laser scanning unit (111); and
moving the actuating part (140) to a position where the actuating part (140) is selectively connected with the skew adjusting part (130) of the at least one laser scanning according to the read-out position of the actuating part (140).
